# EUROPEAN PATENT APPLICATION

(11) **EP 3 786 470 A1**
(43) Date of publication of application: **03.03.2021**
(21) Application number: 20191409.0
(22) Date of filing: 17.08.2020
(51) Int. Cl.: F16B 47/00

(54) **UNIVERSAL CONNECTOR WITH IMPROVED STRUCTURE**

(30) Priority: 30.08.2019 CN 201921438815 U
(71) Applicant: Chen, Xuejun, Jinhua, Zhejiang (CN)
(72) Inventor: Chen, Xuejun, Jinhua, Zhejiang (CN)
(74) Representative: Spittle, Mark Charles

(57) **Abstract**

An universal connector with an improved structure, comprises a pressing buckle and a rotatable U-shaped member, wherein the pressing buckle is fixed on a suction disc; one distal end of the pressing buckle away from the suction disc is rotatably connected to the rotatable U-shaped member via a T-shaped rivet; a U-shaped opening of the rotatable U-shaped member is disposed in a direction opposite to the pressing buckle; penetrative screw holes are provided on both of two side plates of the rotatable U-shaped member; a flat head screw shaft penetrates through the screw holes; the T-shaped rivet is disposed perpendicular to the flat head screw shaft; and a pump bowl for pumping out air in the suction disc is mounted on the suction disc. The present invention can be mounted and connected at any places having a smooth plane, and is particularly suitable for the connection with a plane component while satisfying universal rotation

## Description

### Field of Invention

The present invention relates to a universal connector, and more particularly to a universal connector with an improved structure.

### Background of the Invention

The disadvantage of existing similar connector is inconvenient to be connected and fixed, for example, it is inconvenient to be mounted or connected to a plane component.

### Summary

The technical problem to be solved by the present invention is to provide a universal connector with an improved structure to overcome the defects in the prior art.

To achieve the above aims, the present invention provides the following technical solution:
A universal connector with an improved structure, comprising a pressing buckle and a rotatable U-shaped member, wherein
the pressing buckle is fixed on a suction disc;
one distal end of the pressing buckle away from the suction disc is rotatably connected to the rotatable U-shaped member via a T-shaped rivet;
a U-shaped opening of the rotatable U-shaped member is disposed in a direction opposite to the pressing buckle;
penetrative screw holes are provided on both of the two side plates of the rotatable U-shaped member;
a flat head screw shaft penetrates through the screw holes; the T-shaped rivet is disposed perpendicular to the flat head screw shaft; and
a pump bowl for pumping out air in the suction disc is mounted on the suction disc.

Furthermore, the pressing buckle is fixed on the suction disc via four countersunk head screws.

Optionally, a plane bearing is disposed between the rotatable U-shaped member and the pressing buckle; the T-shaped rivet penetrates through the plane bearing, and is then connected to the suction disc; a flat washer is sleeved on the T-shaped rivet; and the flat washer is disposed between the pressing buckle and the suction disc.

Optionally, the flat head screw shaft penetrates through the screw holes on the two side plates of the rotatable U-shaped member, and is then threadably connected to a flat head locking screw.

Optionally, the pump bowl is clamped and fixed between the pressing buckle and the suction disc.

The present invention has the following beneficial effects: the present invention is practical with low manufacturing cost and novel structure, it can be mounted and connected at any places where having a smooth plane, and is particularly suitable for the connection with a plane component while satisfying universal rotation.

### Brief Description of the Drawings

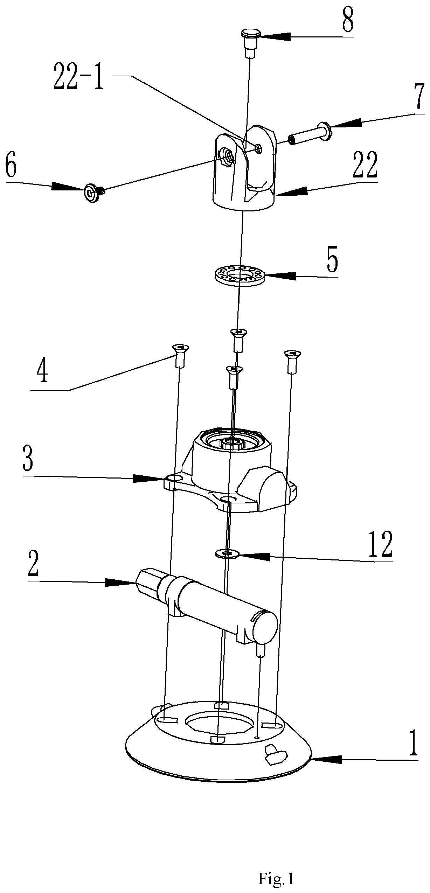

Fig. 1 is an exploded structure diagram of the present invention.

### Detailed description of the embodiments

An universal connector with an improved structure, comprising a pressing buckle 3 and a rotatable U-shaped member 22, wherein the pressing buckle 3 is fixed on a suction disc 1; the distal end of the pressing buckle 3 away from the suction disc 1 is rotatably connected to the rotatable U-shaped member 22 via a T-shaped rivet 8; an U-shaped opening of the rotatable U-shaped member 22 is disposed in a direction opposite to the pressing buckle 3; penetrative screw holes 22-1 are provided on both of the two side plates of the rotatable U-shaped member 22; a flat head screw shaft 7 penetrates through the screw holes 22-1; the T-shaped rivet 8 is disposed perpendicular to the flat head screw shaft 7; and a pump bowl 2 for pumping out air in the suction disc 1 is mounted on the suction disc 1.

The pressing buckle 3 is fixed on the suction disc 1 via four countersunk head screws 4.

A plane bearing 5 is disposed between the rotatable U-shaped member 22 and the pressing buckle 3; the T-shaped rivet 8 penetrates through the plane bearing 5, and is then connected to the suction disc 1; a flat washer 12 is sleeved on the T-shaped rivet 8; and the flat washer 12 is disposed between the pressing buckle 3 and the suction disc 1.

The flat head screw shaft 7 penetrates through the screw holes 22-1 on the two side plates of the rotatable U-shaped member 22, and is then threadably connected to a flat head locking screw 6.

The pump bowl 2 is clamped and fixed between the pressing buckle 3 and the suction disc 1.

The present invention has the following beneficial effects: the present invention is practical, has a low manufacturing cost and a novel structure, can be mounted and connected at any places having a smooth plane, and is particularly suitable for the connection with a plane component while satisfying universal rotation.

With reference to Fig. 1, a spring pulling exercising apparatus, for example, can be fixed on a smooth wall via the structure of the present invention.

The suction disc 1 is pressed on a smooth plane surface, and then the pump bowl 2 pumps out the air in the suction disc 1, in which case the suction disc 1 can be adhered on the smooth wall, so as to fix the present invention.

A housing of the exercising apparatus can be rotatably connected to the flat head screw shaft 7; the exercising apparatus itself can rotate around the flat head screw shaft 7; the rotatable U-shaped member 22 rotates around the T-shaped rivet 8; and the T-shaped rivet 8 is disposed perpendicular to the flat head screw shaft 7, thereby realizing universal rotation.

Optionally, the present invention can be connected to other components on a smooth plane, for example, by rotatably connecting a hook to the flat head screw shaft 7, the present invention can thus be used as a universal hook.

## Claims

1. A universal connector with an improved structure, comprising a pressing buckle (3) and a rotatable U-shaped member (22), wherein, the pressing buckle (3) is fixed on a suction disc (1); the distal end of the pressing buckle (3) away from the suction disc (1) is rotatably connected to the rotatable U-shaped member (22) via a T-shaped rivet (8); a U-shaped opening of the rotatable U-shaped member (22) is disposed in a direction opposite to the pressing buckle (3); penetrative screw holes (22-1) are provided on both of two side plates of the rotatable U-shaped member (22); a flat head screw shaft (7) penetrates through the screw holes (22-1); the T-shaped rivet(8) is disposed perpendicular to the flat head screw shaft (7); and a pump bowl (2) for pumping out air in the suction disc (1) is mounted on the suction disc (1).

2. The universal connector with an improved structure according to claim 1, wherein the pressing buckle (3) is fixed on the suction disc (1) via four countersunk head screws (4).

3. The universal connector with an improved structure according to claim 1, wherein a plane bearing (5) is disposed between the rotatable U-shaped member (22) and the pressing buckle (3); the T-shaped rivet (8) penetrates through the plane bearing ( 5), and is then connected to the suction disc (1); a flat washer (12) is sleeved on the T-shaped rivet (8); and the flat washer (12) is disposed between the pressing buckle (3) and the suction disc (1).

4. The universal connector with an improved structure according to claim 2, wherein a plane bearing (5) is disposed between the rotatable U-shaped member (22) and the pressing buckle (3); the T-shaped rivet (8) penetrates through the plane bearing ( 5), and is then connected to the suction disc (1); a flat washer (12) is sleeved on the T-shaped rivet (8); and the flat washer (12) is disposed between the pressing buckle (3) and the suction disc (1).

5. The universal connector with an improved structure according to claim 3, wherein ,the flat head screw shaft (7)penetrates through the screw holes (22-1) on the two side plates of the rotatable U-shaped member (22), and is then threadably connected to a flat head locking screw (6).

6. The universal connector with an improved structure according to claim 5, wherein the pump bowl (2) is clamped and fixed between the pressing buckle (3) and the suction disc (1).
